# EUROPÄISCHE PATENTSCHRIFT

(11) **EP 3 341 181 B1**
(45) Veröffentlichungstag und Bekanntmachung des Hinweises auf die Patenterteilung: **30.10.2019**
(21) Anmeldenummer: 16756700.7
(22) Anmeldetag: 24.08.2016
(51) Int. Cl.: B29C 48/09, B29C 48/12, B29C 48/90, B29C 48/88

(54) **KÜHL- UND VAKUUMTANK**
COOLING AND VACUUM TANK
RÉSERVOIR DE REFROIDISSEMENT À VIDE

(30) Priorität: 25.08.2015 DE 102015114109
(43) Veröffentlichungstag der Anmeldung: 04.07.2018
(73) Patentinhaber: battenfeld-cincinnati Germany GmbH, 32547 Bad Oeynhausen (DE)
(72) Erfinder: DOHMANN, Heinrich, 37671 Höxter (DE); DRÖGE, Jörg, 47647 Kerken (DE)
(86) Internationale Anmeldenummer: PCT/EP2016/069978
(87) Internationale Veröffentlichungsnummer: WO 2017/032800

(56) Entgegenhaltungen:
- EP-A1- 1 524 093
- WO-A1-97/49533
- WO-A1-2006/060837
- AT-U1- 6 407
- DE-A1-102005 028 084
- DE-A1-102009 041 628
- US-A1- 2001 018 078
- N. N.: "Complete Extrusion Lines for Plastic Pipes - Value Through Know-how", , 30. November 2014 (2014-11-30), Seiten 1-12, XP055315712, Vaasa, Finland Gefunden im Internet: URL:https://www.uponor.com/handler/directd ownload.ashx?did=FBEAEC881A154C8887B558DED 9FDEAD5 [gefunden am 2016-11-02]

## Beschreibung

Kalibrier- und Kühltank einer Extrusionslinie, der sich an ein Extrusionswerkzeug anschließt, wobei zum Kalibrieren der aus dem Extrusionswerkzeug austretenden Kunststoffschmelze der Kalibrier- und Kühltank mit einem Vakuum beaufschlagbar ist, wobei sich der Kalibrier- und Kühltank entlang einer Extrusionsachse erstreckt.

Aus dem Stand der Technik ist zum Beispiel die WO 2006 06 0837 A1 bekannt. Dort wird eine Vorrichtung zum Kalibrieren eines extrudierten Kunststoffprofils mit einem formgebenden Extrusionswerkzeug und mit einem in Längsrichtung des Kunststoffprofils gegenüber dem Extrusionswerkzeug verschiebbaren Gestell beschrieben, das einen Kühltank und zwischen dem Kühltank und dem Extrusionswerkzeug eine auf einem Träger auswechselbar befestigte, an Versorgungsleitungen einerseits für einen Kühlflüssigkeitszu- und -ablauf und anderseits für einen Unterdruck anschließbare Trockenkalibriereinrichtung aufweist. Um vorteilhafte Montagebedingungen zu erhalten, wird vorgeschlagen, dass der in Längsrichtung des Kunststoffprofils relativ gegenüber dem Kühltank verstellbare Träger einen mit den Versorgungsleitungen verbundenen Verteiler mit Leitungsübergängen für die Kühlflüssigkeit und den Unterdruck im Aufsetzbereich der mit entsprechenden Leitungsübergängen versehenen Trockenkalibriereinrichtung bildet.

Auch die AT 6407U1 und die US 20010018078 offenbaren ein Verfahren zur Regelung der Vakuumversorgung von Kalibrierwerkzeugen bei dem Luft in einen gemeinsamen Druckbehälter absaugt.

Aus der US20010018078 ist eine Formvorrichtung für eine Extrusionanlage mit mindestens einer Kalibriereinrichtung bekannt die mindestens ein Kalibrierungswerkzeug mit einer Mehrzahl von Kalibrierwerkzeugen umfasst, die nach dem anderes in einer Extrusionsrichtung, mit mindestens einem Kalibrieröffnung mit mehreren Umformflächen.

In der DE 10 2005 028084 wird ein Verfahren zum Wechseln des Kalibriereinsatzes eines Vakuumtanks beschrieben.

**Aufgabe** der Erfindung ist es, einen Kühl- und Kalibriertank anbieten zu können, der einerseits aus wenigen Bauteilen besteht und andererseits so aufgebaut ist, dass ein vielseitiger Einsatz der Bauteile ermöglicht wird.

Die **Lösung** der Aufgabe ist in Verbindung mit dem Oberbegriff des Anspruches 1 dadurch gekennzeichnet, dass der Kalibrier- und Kühltank modulartig aufgebaut ist, wobei mindestens ein Modul eine Kalibrier- und Kühlstrecke bildet, wobei das Modul beidseitig einen Anschlussbereich aufweist, an den ein weiteres Modul anbringbar ist, wobei der Anschlussbereich aus einem Flansch besteht, der sich vom Grundkörper des Kalibrier- und Kühltanks nach außen erstreckt, wobei der Querschnitt des Grundkörpers einer Eiform entspricht.

Durch diese nach außen gerichteten Flansche, die auch direkt aus dem Blech des Grundkörpers gekantet werden können, wird sichergestellt, dass im Inneren des Tanks weitgehend glatte und durchgehende Flächen entstehen. Unschöne Ecken und Sicken oder sonstige vorstehende Bauteile werden vermieden. Jede Länge von Kalibrier- und Kühltanks ist abbildbar, da quasi identische Module aneinander gereiht werden können. Der einheitliche Aufbau des Moduls erstreckt sich über unterschiedliche Größen, sodass Pumpen, Wasserverteiler etc. an jedes Modul und an jeder Größe von Modulen angebaut werden können. Hier wurde erfindungsgemäß die zylindrische Form dahin gehend verändert, dass eine größere Wassermenge unter dem Rohr aufgenommen werden kann, wodurch die hier beschriebene Eiform entsteht. Dazu schlägt die Erfindung vor, den Querschnitt des Grundkörpers in einer Eiform zu gestalten. Solche eiförmigen Grundkörper lassen sich durch Kanten oder durch Walzen von ein- oder mehrteiligen Blechen herstellen.

Weiterbildungsgemäß wird vorgeschlagen, dass das Modul mindestens einen Grundkörper umfasst, der aus einem gekanteten oder gewalzten Blech mit kontinuierlicher, nicht zwingend stetiger Krümmung besteht. Dies hat den Vorteil, dass weniger Bauteile zur Herstellung eines Tanks benötigt werden und in Summe der gesamte Tank kleiner baut ohne an Festigkeit und Stabilität zu verlieren. Der Grundkörper kann aus mehreren zusammengesetzten Blechen, aber auch aus einem einteiligen Blech gefertigt werden.

Vorteilhafterweise sind die Anschlussbereiche jedes Moduls gleich ausgeführt. Somit ist der erste Anschlussbereich eines ersten Moduls mit dem zweiten Anschlussbereich eines zweiten Moduls verbindbar. Daher kann die Reihenfolge der hintereinander montierten Module beliebig geändert und diese sogar in sich gedreht werden. Es spielt somit keine Rolle, wie herum das Modul in einer Reihenschaltung von Modulen eingebaut wird. Es gibt somit kein vorne oder hinten bzw. rechts oder links.

In manchen Prozessen ist es erforderlich, dass ein Kühl- und Kalibriertank zwei oder mehrere Kammern aufweist. Die Erfindung bietet daher die Möglichkeit beim Verbinden zweier Module zwischen diesen eine Trennwand einzusetzen, wodurch ein Tank mit zwei Kammern entsteht. Durch diese Ausgestaltung des Grundkörpers und des sich nach außen erstreckenden Flansches, bleibt auch mit einer eingesetzten Trennwand, die grundlegende Durchgängigkeit im Inneren des Tanks erhalten.

Besonders vorteilhaft ist es, wenn eine Querschnittsgeometrie gewählt wird, die auf der einen Seite ein Höchstmaß an Unterdruckeigensteifigkeit aufweist und auf der anderen Seite die beiden Funktionsbereiche "Kühlen des Rohres" und "Sammeln des Kühlwassers" ideal verbindet. Es sollen also minimale Herstellungskosten und ein Höchstmaß an Funktionalität erreicht werden.

In der Regel handelt es sich um einen Behälter mit einem Unterdruck auf der Innenseite bzw. einem Überdruck auf der Außenseite. Die Wände des Behälters erfahren dabei eine Druckbelastung in ihrer Längsrichtung und werden gleichzeitig aus ihrer stabilen Lage ausgelenkt. Daraus resultiert ein Stabilitätsversagen in Form von Knicken oder Beulen. Um dem entgegen zu wirken sollte idealerweise eine Behälterform gewählt werden, die in sich gestützt wird. Zu bevorzugen wäre ein Zylinder. Eher ungünstig sind Strukturen mit großen geraden Flächen.

Naturgemäß ist die Eiform sehr eigenstabil und die benötigte runde Form für die Produktion des Rohres ist darin enthalten. An der Eispitze entsteht ein Sumpf, der das Sammeln des Kühlwassers ermöglicht, und am Eikopf bildet der Übergang zum Deckel eine Einheit.

Somit umfasst das Modul einen Deckel, der so ausgeführt ist, dass er im Modul in eine Aufnahme für den Deckel derart passt, dass beim Anlegen des Vakuums der Deckel in der Aufnahme verklemmt wird und somit ein tragendes Teil des Kalibrier- und Kühltanks ist. Hierdurch wird der eiförmige Querschnitt geschlossen.

In einer weiteren Fortbildung ist vorgesehen, dass am Modul C-Profile zur Befestigung von Anbauteilen angeordnet sind. Diese C-Profile sind zu einer senkrechten Schnittebene zur Extrusionsachse spiegelsymmetrisch am Modul angeordnet, damit Anbauteile unabhängig von der Position des Moduls (gedreht, andere Reihenfolge, wie weiter oben beschrieben) angebracht werden können. Je nach Anforderung können somit alle Anbauteile in einer Links- oder Rechtsausführung am C-Profil angebracht werden.

An diesen C-Profilen kann auch der außenliegende Wasserverteiler angebracht werden. Zu den Vorteilen des außenliegenden Wasserverteilers zählen:
- Gleiche Wasserverteiler können für verschiedene Baugrößen eingesetzt werden
- Der außenliegende Wasserverteiler ermöglicht eine individuelle Wassermengensteuerung an den Sprühstangen
- Der außenliegende Wasserverteiler ist in der Herstellung deutlich einfacher zu fertigen
- Wenn ein Modul keinen Wasserverteiler benötigt, wird dieser auch nicht montiert

In einer weiteren Fortbildung wird vorgeschlagen am Kühl- und Kalibriertank eine Konsole für eine Pumpe anzuordnen. Hierbei ist die Konsole so gefertigt, dass diese eine universell aufgeführte Pumpenaufnahme aufweist. Es können somit alle herkömmlichen Pumpen montiert werden.

Der Kühl- und Kalibriertank verfügt vorteilhafterweise über abnehmbare Standfüße, die auch gegen höhere Standfüße ausgetauscht werden können, da die entsprechende Montagemöglichkeit der Füße am Modul für alle Standfüße gleich aufgebaut ist. Kleine Höhenänderungen werden durch das am Fuß verschraubte Fahrwerk realisiert.

Gemäß einer vorteilhaften Weiterbildung ist vorgesehen, dass im Modul Montageplatten angeordnet sind. An diese Montageplatten können universelle Aufnahmen für einfache Unterstützungsscheiben oder einfache Unterstützungsrollen oder auch inline dem Rohrdurchmesser entsprechend einstellbare Unterstützungseinheiten (Schneckenrolle oder Scherenhubeinheiten) angebracht werden.

Vorteilhafte Weiterbildungen sind in den Unteransprüchen und in den Figurenbeschreibungen wiedergegeben.

In den Zeichnungen wird schematisch eine erfindungsgemäße Vorrichtung gezeigt:
- Fig. 1: zeigt eine typische Extrusionslinie,
- Fig. 2: zeigt schematisch den Aufbau einer Kalibrier- und Kühlstrecke,
- Fig. 3: zeigt eine perspektivische Darstellung eines Moduls,
- Fig. 4: und
- Fig. 5: verdeutlichen die Möglichkeit des Drehens der Module,
- Fig. 6: verdeutlicht das gekantete Blech eines Moduls,
- Fig. 7: zeigt die im Modul angeordneten Montagescheiben, in
- Fig. 8: sind die einheitlichen Deckel zu sehen,
- Fig. 9: zeigt die platzsparende Gruppierung mehrerer Module,
- Fig. 10: ist ein vergrößerter Ausschnitt aus Figur 2,
- Fig. 11: ist ein weiterer vergrößerter Ausschnitt aus Figur 2,
- Fig. 12: zeigt wiederum eine Teilvergrößerung aus Figur 2,
- Fig. 13: verdeutlicht den optimierten Bereich des Deckels und
- Fig. 14: zeigt in einem Querschnitt durch das Modul die Anordnung der C-Rahmen.

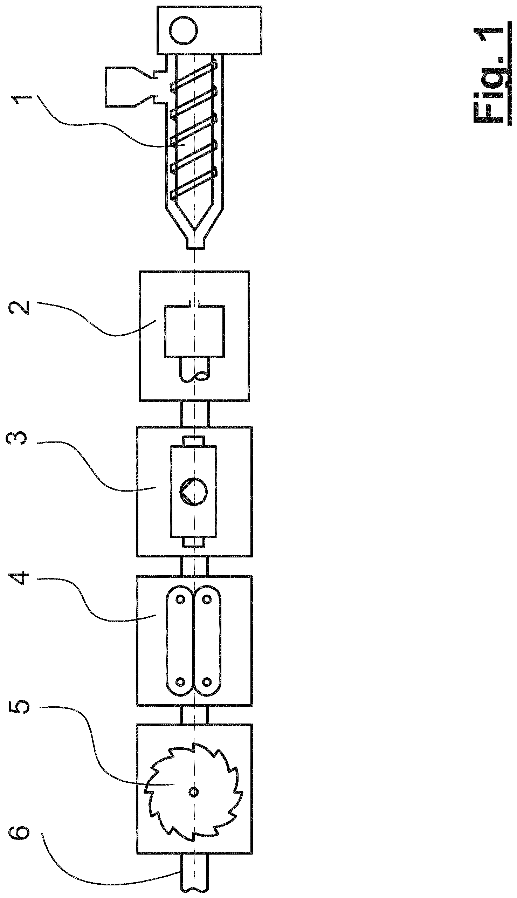

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen und kontinuierlich zur Formgebung ins Extrusionswerkzeug 2 gefördert wird. Daran schließt sich eine Kalibrier- und Kühlstation 3 an. Je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet.

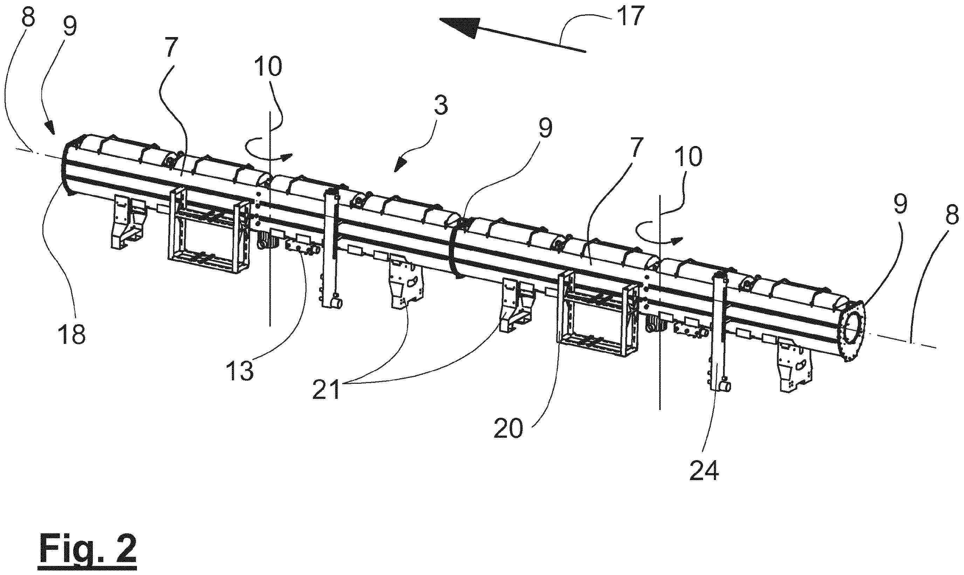

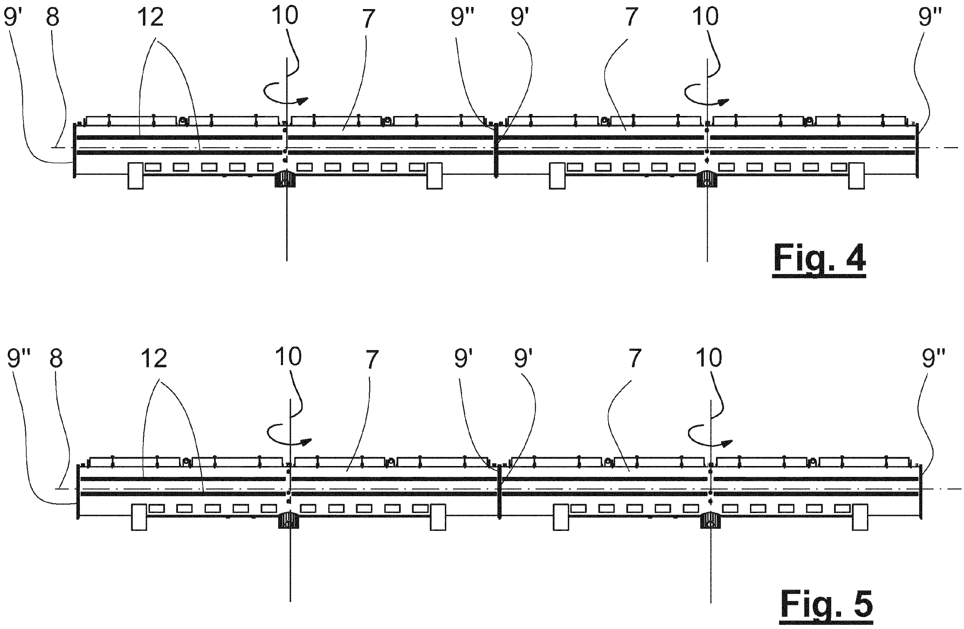

Figur 2 zeigt schematisch den Aufbau einer Kalibrier- und Kühlstrecke, die den modulartigen Aufbau verdeutlicht. Hier sind vier Module 7 zu einer Strecke zusammengefasst. Alle vier Module erstrecken sich entlang der Extrusionsachse 8 und sind über Anschlussbereiche 9 miteinander verkoppelt. Jedes der Module 7 weist an jeder Stirnseite einen Anschlussbereich 9 in Form eines Flansches auf, über den er mit einem benachbarten Modul 7 verbunden ist. Wird ein Modul 7 um eine theoretische Achse 10, die senkrecht zur Extrusionsachse 8 verläuft, um 180° gedreht, passt der Anschlussbereich 9 von der gegenüberliegenden Stirnseite ebenfalls an den vorhandenen Anschlussbereich 9 des nicht gedrehten Moduls 7. In den Figuren 4 und 5 wird das noch einmal im Detail verdeutlicht.

Die Module 7 stehen auf abnehmbaren Standfüßen 21. An den am Grundkörper 19 der Module 7 angeordneten C-Profilen 12 sind Wasserverteiler 13 sowie Montagehalter 20 angebraucht. Ebenso können (mindestens) ein Ablauf 24 und weitere Versorgungsteile angebracht werden.

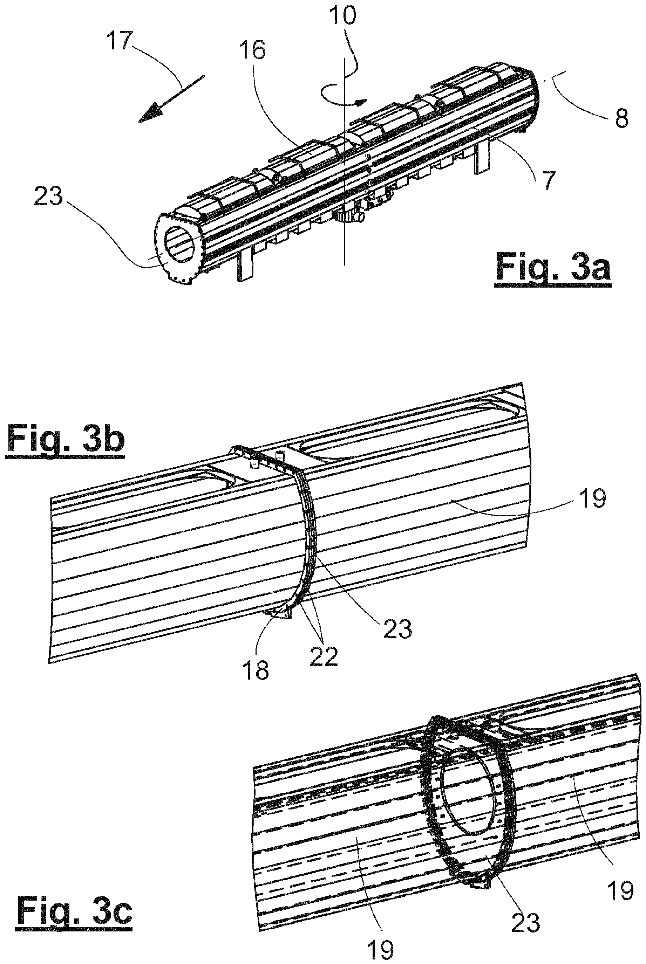

Figur 3 zeigt eine perspektivische Darstellung eines Moduls 7 mit dem nach außen verlaufenden Flansch 18, der den Anschlussbereich 9 bildet.

Wird zwischen zwei Modulen 7 eine Trennwand 23, wie sie an der Stirnwand des Moduls 7 in der Figur 3a gezeigt ist, angeordnet, bevor die beiden Module 7 verbunden werden, entsteht ein Tank mit zwei getrennten Kammern, die mit unterschiedlichen Drücken bzw. Vakua beaufschlagt werden können. Diese Trennung sowie die Verbindung sind in der vergrößerten Ausschnittdarstellung der Figuren 3b und 3c verdeutlicht. Gleiche Teile sind wiederum mit gleichen Bezugsziffern versehen.

Die Figuren 4 und 5 veranschaulichen die Möglichkeit des Drehens der Module bzw. den Austausch der Reihenfolge der hintereinander gesetzten Module.

Figur 4 zeigt zwei Module 7, bei denen jeweils der Anschlussbereich 9' mit dem Anschlussbereich 9" des anschließenden Moduls 7 verbunden ist. In Figur 5 ist das linke Modul 7 im Vergleich zur Figur 4 um 180° um die Senkrechte 10 gedreht, sodass die beiden Anschlussbereiche 9' miteinander gekoppelt sind.

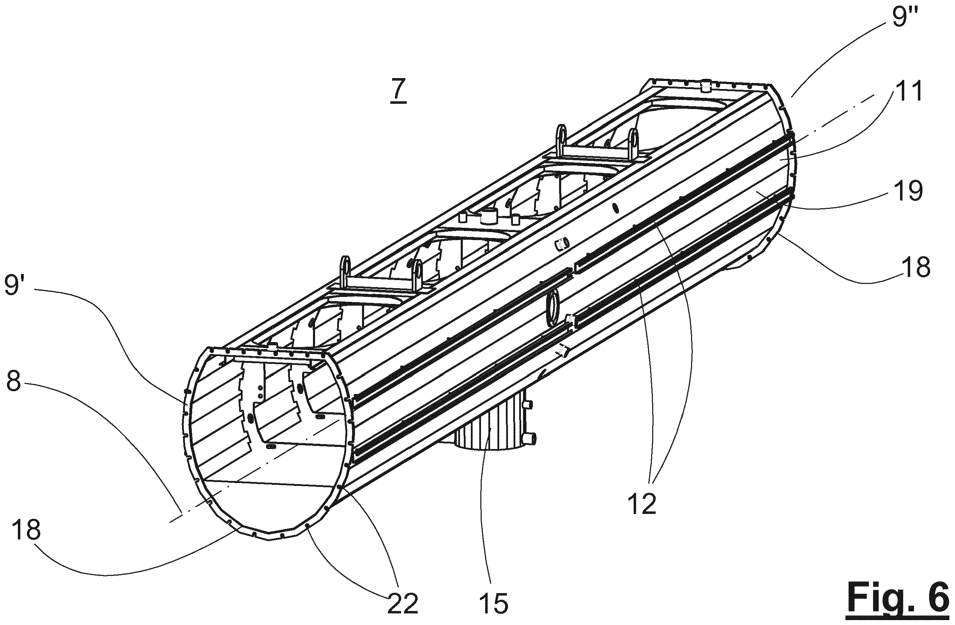

Figur 6 zeigt ein Modul 7, das aus einem einteiligen gekanteten Blech 11 gefertigt ist, das den Grundkörper 19 bildet. Der angeordnete Flansch 18 erstreckt sich nach außen und ist separat angeschweißt. Er kann aber auch aus dem gleichen Blech wie der Grundkörper gefertigt sein, wobei sich dann der gekantete Flansch 18 bezogen auf die Extrusionsachse 8 nach außen erstreckt. Damit ist gewährleistet, dass das Innere des Tanks weitgehend glatt ausgeführt ist. Der Flansch weist Montageöffnungen 22 zum Verbinden zweier Module 7 auf. Wird der Flansch 18 durch Abkantung des Grundbleches erstellt, entsteht naturgemäß bei jeder Kante des Grundkörpers am Flansch 18 eine Öffnung, die wiederum gleichzeitig als Montageöffnung 22 zum Verbinden zweier Module 7 geeignet ist.

Jeder der stirnseitigen Flansche 18 bildet einen Anschlussbereich 9. Die perspektivische Darstellung des Moduls 7 zeigt somit einen Anschlussbereich 9' auf der einen Stirnseite und einen identischen Anschlussbereich 9" auf der anderen Stirnseite des Moduls.

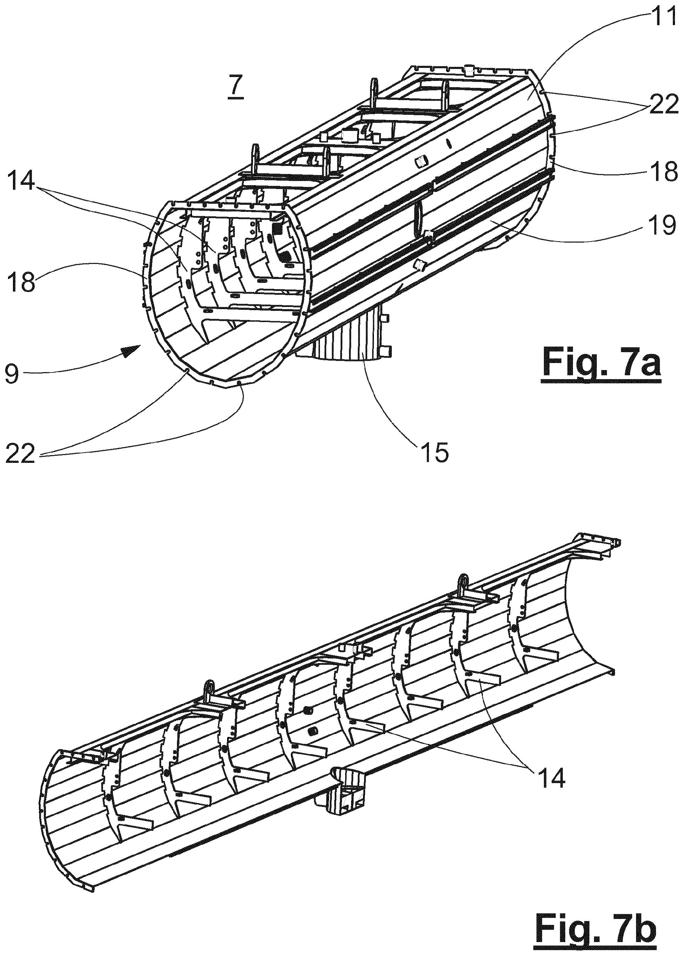

Figur 7 zeigt im Modul 7 angeordnete Montagescheiben 14. Diese Montagescheiben 14 können vielseitig eingesetzt werden; so können sie als Stützscheiben im Tank wirken, es können daran aber auch eine Vielzahl von Zubehör, wie Stützrollen für das produzierte Rohr oder Verstellelemente oder dergleichen angebracht werden. Bei der Figur 7a sind die Montagescheiben 14 über das an der Seite offene Modul 7 zu erkennen. In der Figur 7b wird das Ganze in einer Schnittdarstellung deutlicher. Das Modul 7 ist in seiner Längsachse halbiert und nur eine Hälfte des Moduls 7 ist dargestellt, damit die Teile im Inneren des Moduls 7 deutlicher erkennbar werden.

Weiterhin sind ein unter dem Modul 7 angebrachtes Wasserreservoir 15 sowie die Flansche 18 als Anschlussbereiche 9 zu sehen.

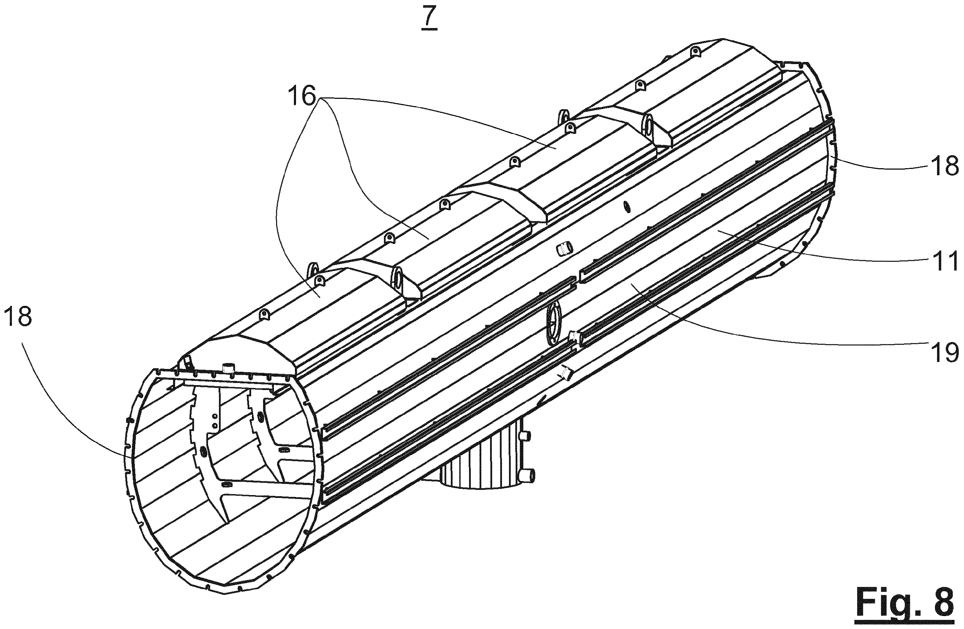

Figur 8 zeigt einheitliche Deckel 16, die die Öffnungen im Modul 7 verschließen. Die Deckel sind alle gleich ausgeführt und somit gegeneinander austauschbar. Die Deckel 16 schließen sich an die Kontur der Öffnung in den Modulen 7 an. Dadurch wird erreicht, dass diese beim Anlegen eines Vakuums im Modul 7 verklemmen und somit zusätzlich als tragendes Element wirken. Auch hier sind wieder die Flansche 18 und der aus Blech 11 gekantete Grundkörper 19 zu erkennen.

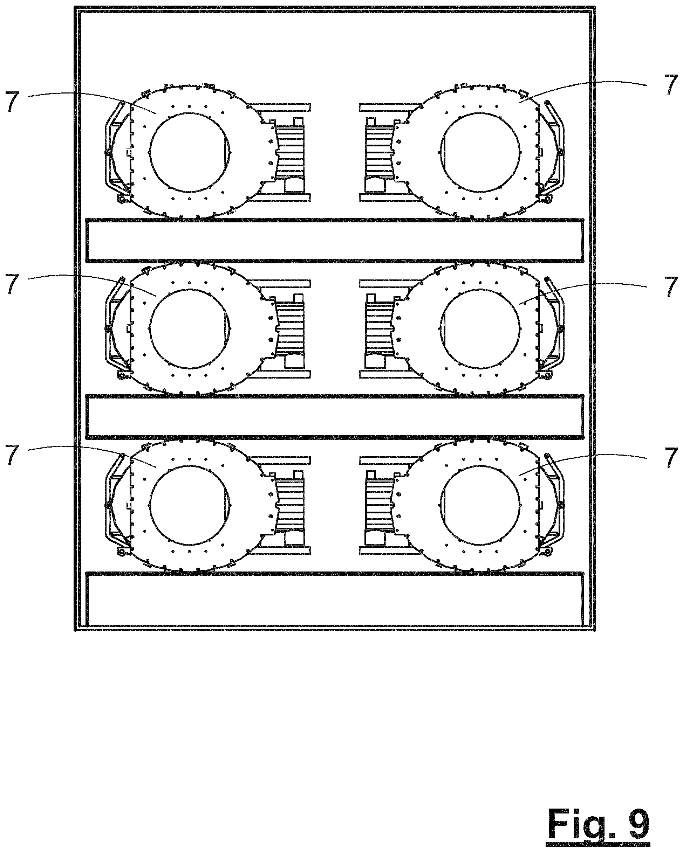

Figur 9 zeigt die platzsparende Gruppierung mehrere Module 7 in einem Überseecontainer, was vor allem durch die abnehmbaren Standfüße 21 erreicht wird. Jeweils zwei Module 7 liegen auf den C-Profilen 12 nebeneinander. Durch die stabile Konstruktion des Grundkörpers können so zwei weitere Schichten von Modulen übereinander gestapelt in einem Container verstaut werden, wodurch kostengünstig die Module z.B. mittels Überseecontainer verschifft werden können.

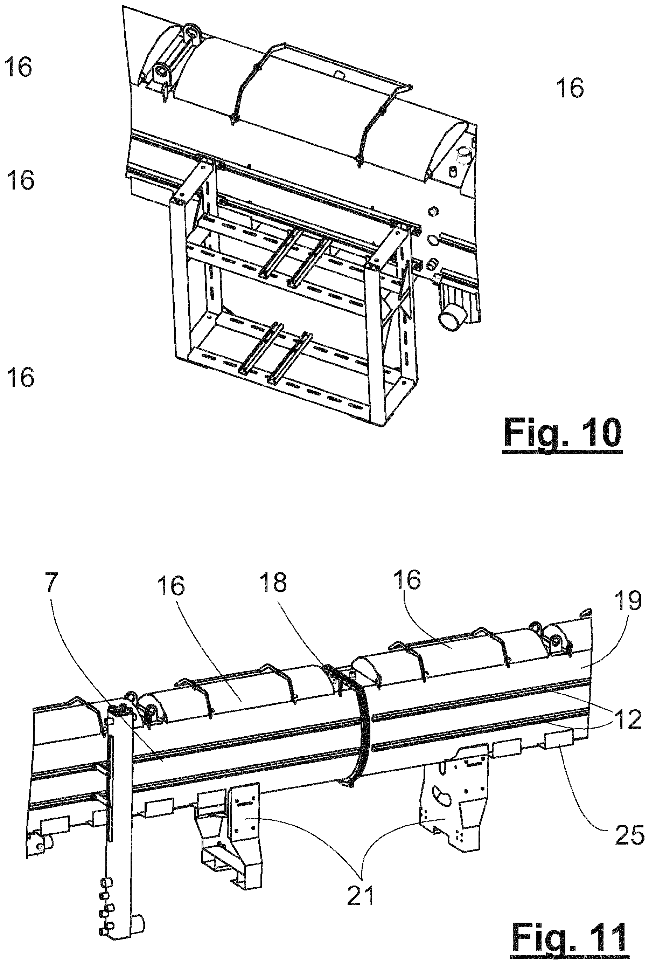

Figur 10 zeigt einen vergrößerten Ausschnitt aus der Figur 2, bei der die Konsole 20 für eine Pumpe deutlicher zu sehen ist. Die Konsole 20 ist am C-Rahmen 12 angebracht und so ausgeführt, dass die daran angeordneten Montageschienen wiederum in ihrer Position verstellbar sind. Dies hat den großen Vorteil, dass z.B. in die Montageschienen alle gängigen Befestigungsfüße von Pumpen eingebracht und montiert werden können. Der Montagehalter ist somit flexibel an die Bauart oder an die benötigte Größe einer Pumpe anpassbar. Durch diese sehr flexible Ausführung können an dem Montagehalter natürlich auch alle sonstigen in der Extrusion gängigen Zubehörteile befestigt werden.

Figur 11 ist ebenfalls eine Vergrößerung aus Figur 2 und stellt den Teil mit den Standfüßen 21 dar. Die Standfüße 21 werden an am Grundkörper 19 angebrachten Platten 25 befestigt. Die Standfüße 21 selbst verfügen wiederum über Befestigungsöffnungen, an denen Verlängerungen montierbar sind, um unterschiedliche Standhöhen abzudecken. Figur 11 zeigt auch wieder die Flansche 18 zur Verbindung der Module 7 sowie die Deckel 16 und einen Teil einer Konsole 20.

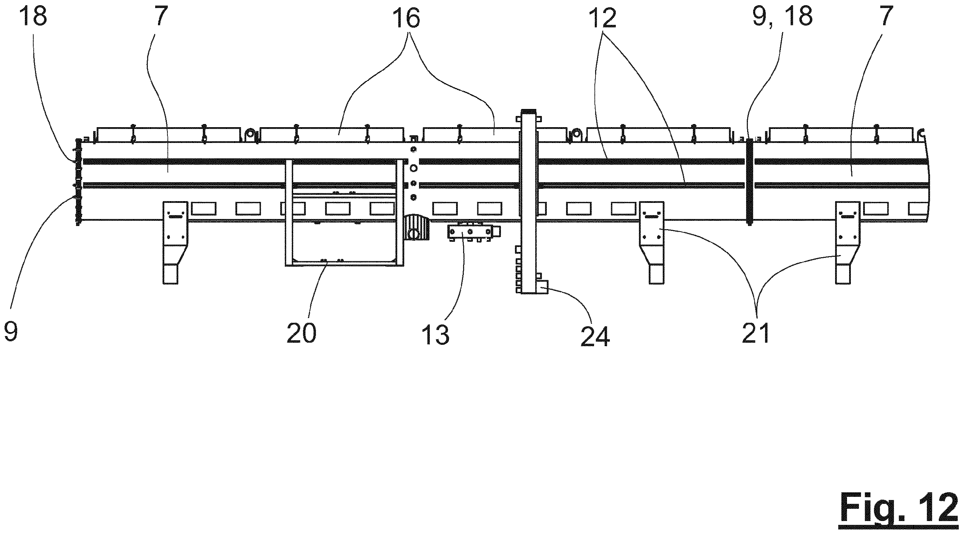

Figur 12 zeigt wiederum eine Teilvergrößerung aus der Figur 2, in der die Zusammenschau der in den Figuren 10 und 11 beschriebenen Details erkennbar ist. Die Module 7 sind über die Flansche 18 verbunden. An den C-Profilen 12 sind (mindestens) ein Abfluss 24 sowie die Konsole 20 angebracht. Unter einem Modul 7 ist ein Wasserverteiler 13 zu sehen und die Module 7 stehen auf den Standfüssen 21.

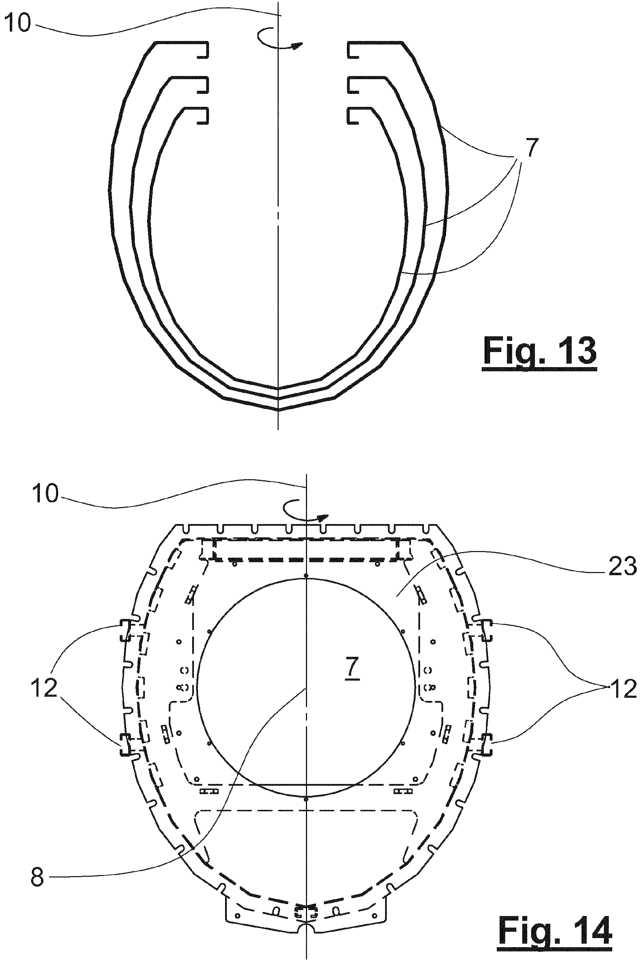

Figur 13 verdeutlicht den optimierten Bereich des Deckels (hier nicht dargestellt). Es sind hier nur die Blechquerschnitte unterschiedlicher Größen der Module 7 dargestellt. Deutlich zu erkennen ist, dass trotz unterschiedlicher Querschnitte die Ausschnitte für die Deckelaufnahme identische Abmaße aufweisen. Somit wird deutlich, dass gleiche Deckel für unterschiedliche Tankgrößen einsetzbar sind, wobei auch die unterschiedlichen Tankgrößen gleich ausgeführt sind. Die Querschnitte erstrecken sich entlang der Extrusionsachse 8 und sind um eine Senkrechte 10 zur Extrusionsachse 8 spiegelsymmetrisch ausgeführt.

Figur 14 ist ein Querschnitt eines Moduls 7 und zeigt die symmetrisch angeordneten C-Rahmen 12. Diese sind auf diesen Querschnitt bezogen jeweils spiegelsymmetrisch zur Senkrechten 10. In dieser Figur ist zusätzlich die Trennwand 23 zu sehen, die in den Figuren 3a bis 3c näher beschrieben wird.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: Modul
- 8: Extrusionsachse
- 9: Anschlussbereich von 7
- 10: Senkrechte zu 8
- 11: Blech
- 12: C-Profil an 7
- 13: Wasserverteiler an 7
- 14: Montageplatten
- 15: Wasserreservoir
- 16: Deckel
- 17: Extrusionsrichtung
- 18: Flansch für 9
- 19: Grundkörper von 3
- 20: Konsole für Pumpe
- 21: Standfuß
- 22: Montageöffnung
- 23: Trennwand
- 24: Ablauf

## Patentansprüche

1. Kalibrier- und Kühltank einer Extrusionslinie, der sich an ein Extrusionswerkzeug (2) anschließt,
wobei zum Kalibrieren der aus dem Extrusionswerkzeug (2) austretenden Kunststoffschmelze der Kalibrier- und Kühltank (3) mit einem Vakuum beaufschlagbar ist,
wobei sich der Kalibrier- und Kühltank (3) entlang einer Extrusionsachse (8) erstreckt, wobei der Kalibrier- und Kühltank (3) modulartig aufgebaut ist,
wobei mindestens ein Modul (7) eine Kalibrier- und Kühlstrecke bildet,
wobei das Modul (7) beidseitig einen Anschlussbereich (9) aufweist, an denen ein weiteres Modul (7) anbringbar ist, **dadurch gekennzeichnet, dass**
der Anschlussbereich (9) aus einem Flansch (18) besteht, der sich vom Grundkörper (19) des Kalibrier- und Kühltanks (3) nach außen erstreckt,
wobei der Querschnitt des Grundkörpers (19) einer Eiform entspricht.

2. Kalibrier- und Kühltank nach Anspruch 1, **dadurch gekennzeichnet, dass** das Modul (7) mindestens einen Grundkörper (19) umfasst, der aus einem gekanteten oder gewalzten Blech (11) besteht.

3. Kalibrier- und Kühltank nach Anspruch 1 oder 2, **dadurch gekennzeichnet, dass** ein erster Anschlussbereich (9') und ein zweiter Anschlussbereich (9") so ausgeführt sind, dass der erste Anschlussbereich (9') eines ersten Moduls (7) mit dem zweiten Anschlussbereich (9") eines zweiten Moduls (7) verbindbar ist.

4. Kalibrier- und Kühltank nach Anspruch 3, **dadurch gekennzeichnet, dass** zwischen zwei Modulen (7) eine Trennwand (23) einsetzbar ist, wodurch ein Tank mit zwei Kammern entsteht.

5. Kalibrier- und Kühltank nach mindestens einem der vorigen Ansprüche, **dadurch gekennzeichnet, dass** das Modul (7) einen Deckel (16) umfasst, wobei der Deckel (16) und die Aufnahme für den Deckel (16) im Modul (7) so ausgeführt sind, dass beim Anlegen des Vakuums der Deckel (16) in der Aufnahme verklemmt wird und somit ein tragendes Teil des Kalibrier- und Kühltanks ist.

6. Kalibrier- und Kühltank nach mindestens einem der vorigen Ansprüche, **dadurch gekennzeichnet, dass** am Modul (7) C-Profile (12) zur Befestigung von Anbauteilen angeordnet sind.

7. Kalibrier- und Kühltank nach einem der vorigen Ansprüche, **dadurch gekennzeichnet, dass** am Kühl- und Kalibriertank (3) eine Konsole für eine Pumpe (20) angeordnet ist.

8. Kalibrier- und Kühltank nach einem der vorigen Ansprüche, **dadurch gekennzeichnet, dass** der Kühl- und Kalibriertank (3) abnehmbare Standfüße (21) aufweist.

9. Kalibrier- und Kühltank nach einem der vorigen Ansprüche, **dadurch gekennzeichnet, dass** im Modul (7) Montageplatten (14) angeordnet sind.

## Claims

1. Calibration and cooling tank of an extrusion line, arranged downstream of an extrusion die (2),
a vacuum being able to be applied to said calibration and cooling tank (3) for the purpose of the calibration of the plastic melt exiting the extrusion die (2),
the calibration and cooling tank (3) extending along an extrusion axis (8), the calibration and cooling tank (3) being having a modular structure, at least one module (7) forming a calibration and cooling line,
the module (7) featuring a connection area (9) at each end to which another module (7) can be attached,
**characterized in that**
the connection area (9) consists of a flange that extends outwards from the main body (19) of the calibration and cooling tank (3),
the cross section of the main body (19) featuring an egg form.

2. Calibration and cooling tank according to claim 1, **characterized in that** the module (7) comprises at least one main body (19) consisting of a folded or rolled metal sheet (11).

3. Calibration and cooling tank according to claim 1 or 2, **characterized in that** a first connection area (9') and a second are designed to allow for the first connection area (9') of a first module (7) to be attached to the second connection area (9") of a second module (7).

4. Calibration and cooling tank according to claim 3, **characterized in that** a partition wall (23) can be inserted between two modules (7), thus forming a tank with two chambers.

5. Calibration and cooling tank according to at least one of the preceding claims, **characterized in that** the module (7) comprises a lid (16), the lid and the fixture for the lid (16) within the module being designed to assure that the lid (16) is jammed in the fixture when the vacuum is applied, thus forming a supporting part of the calibration and cooling tank (3).

6. Calibration and cooling tank according to at least one of the preceding claims, **characterized in that** C-profiles (12) are fastened to the module (7), designed to fix attachment parts to it.

7. Calibration and cooling tank according to one of the preceding claims, **characterized in that** a mounting bracket for a pump (20) is attached to the calibration and cooling tank (3).

8. Calibration and cooling tank according to one of the preceding claims, **characterized in that** the calibration and cooling tank features removable supporting feet (21).

9. Calibration and cooling tank according to one of the preceding claims, **characterized in that** mounting plates (14) are arranged inside the module.

## Revendications

1. Réservoir de calibrage et de refroidissement en tant qu'une partie d'une ligne d'extrusion, ledit réservoir de calibration et de refroidissement étant situé en aval d'un outil d'extrusion (2),
un vide pouvant être appliqué au réservoir de calibrage et de refroidissement (3) pour le calibrage de la matière plastique fondue sortant de l'outil d'extrusion (2),
le réservoir de calibrage et de refroidissement (3) s'étendant le long d'une axe d'extrusion (8),
le réservoir de calibrage et de refroidissement (3) étant composé d'éléments partiels modulaires,
au moins un module (7) constituant une ligne d'extrusion et de refroidissement,
ledit module (7) étant muni sur les deux faces d'une zone de raccord (9) à laquelle un autre module (7) peut être monté,
**caractérisé en ce que**
la zone de raccord (9) se compose d'une bride (18) qui s'étend à l'extérieur du corps de base (19) du réservoir de calibrage et de refroidissement (3),
la section transversale du corps de base (19) ressemblant à la forme d'un œuf.

2. Réservoir de calibrage et de refroidissement selon la revendication 1, **caractérisé en ce que** le module (7) comprend au moins un corps de base (19) composé d'une tôle pliée ou laminée (11).

3. Réservoir de calibrage et de refroidissement selon la revendication 1 ou 2, **caractérisé en ce qu'**une première zone de raccord (9') et une deuxième zone de raccord (9") sont conçues de telle manière que la première zone de raccord (9') d'un premier module (7) puisse être connectée avec la deuxième zone de raccord (9") d'un deuxième module (7).

4. Réservoir de calibrage et de refroidissement selon la revendication 3, **caractérisé en ce qu'**une cloison (23) peut être insérée entre deux modules (7), ainsi créant un réservoir à deux chambres.

5. Réservoir de calibrage et de refroidissement selon au moins l'une quelconque des revendications précédentes, **caractérisé en ce que** le module (7) comprend un couvercle (16), ledit couvercle (16) ainsi que le logement de couvercle (16) dans le module étant conçus de telle manière que le couvercle (16) se bloque dans le logement lors qu'un vide est appliqué, ainsi devenant un élément de support du réservoir de calibrage et de refroidissement (3).

6. Réservoir de calibrage et de refroidissement selon au moins l'une quelconque des revendications précédentes, **caractérisé en ce que** des profils en C (12) sont arrangés au module (7) pour la fixation de pièces structurelles rapportées.

7. Réservoir de calibrage et de refroidissement selon l'une quelconque des revendications précédentes, **caractérisé en ce qu'**une console pour une pompe (20) est arrangée au réservoir de calibrage et de refroidissement (3).

8. Réservoir de calibrage et de refroidissement selon l'une quelconque des revendications précédentes, **caractérisé en ce que** le réservoir de calibrage et de refroidissement (3) comprend des pieds démontables (21).

9. Réservoir de calibrage et de refroidissement selon l'une quelconque des revendications précédentes, **caractérisé en ce que** des plaques de montage (14) sont arrangées dans le module (7).
